# EUROPÄISCHE PATENTSCHRIFT

(11) **EP 0 720 636 B1**
(45) Veröffentlichungstag und Bekanntmachung des Hinweises auf die Patenterteilung: **24.06.1998**
(21) Anmeldenummer: 94927615.8
(22) Anmeldetag: 15.09.1994
(51) Int. Cl.: C09D 5/44, C08G 18/67

(54) **ELEKTROTAUCHLACKE UND VERFAHREN ZUM LACKIEREN ELEKTRISCH LEITFÄHIGER SUBSTRATE**
ELECTRO-DIPCOATING PAINT AND PROCESS FOR DIP-COATING ELECTROCONDUCTIVE SUBSTRATES
VERNIS AU TREMPE ELECTROPHORETIQUE ET PROCEDE DE VERNISSAGE DE SUBSTRATS ELECTROCONDUCTEURS

(30) Priorität: 21.09.1993 DE 4332014
(43) Veröffentlichungstag der Anmeldung: 10.07.1996
(73) Patentinhaber: BASF Coatings Aktiengesellschaft, 48165 Münster (DE)
(72) Erfinder: REUTER, Hardy, D-48167 Münster (DE); OTT, Günther, D-48167 Münster (DE); JOUCK, Walter, D-48167 Münster (DE)
(86) Internationale Anmeldenummer: EP9403088
(87) Internationale Veröffentlichungsnummer: WO9508597

(56) Entgegenhaltungen:
- EP-A- 0 207 570
- EP-A- 0 259 181
- EP-A- 0 398 757
- EP-A- 0 442 533
- FR-A- 2 379 587

## Beschreibung

Die Erfindung betrifft kathodisch abscheidbare Kunstharze enthaltende wäßrige Elektrotauchlacke und ein Verfahren zum Lackieren elektrisch leitfähiger Substrate, bei dem
(1) das elektrisch leitfähige Substrat in einen wäßrigen Elektrotauchlack getaucht wird,
(2) das Substrat als Kathode geschaltet wird,
(3) durch Gleichstrom ein Film auf dem Substrat abgeschieden wird,
(4) das lackierte Substrat aus dem Elektrotauchlack entfernt wird und
(5) der abgeschiedene Lackfilm eingebrannt wird.

Kathodisch abscheidbare Kunstharze enthaltende Elektrotauchlacke und das oben beschriebene kathodische Elektrotauchlackierverfahren, bei dem die kathodisch abscheidbare Kunstharze enthaltenden Elektrotauchlacke zur Anwendung kommen, sind schon lange Zeit bekannt und werden zur automatischen Lackierung von Massengütern, insbesondere zur automatischen Lackierung von Fahrzeug-, insbesondere Automobilkarosserien im großen Umfang eingesetzt (vergleiche dazu zum Beispiel Glasurit Handbuch Lacke und Farben, Curt R. Vincentz Verlag, Hannover, 1984, Seiten 374-384 und Seiten 457-462, sowie DE-A-35 18 732, DE-A-35 18 770, EP-A-40 090, EP-A-12 463, EP-A-259 181, EP-A-433 783 und EP-A-262 069).

Bei der Lackierung elektrisch leitfähiger Substrate mit Hilfe des kathodischen Elektrotauchlackierverfahrens tritt das Problem auf, daß die Kanten des zu lackierenden Substrates nur mit einer unzureichend dicken Lackschicht lackiert werden. Das hat unter anderem zur Folge, daß die Kanten des lackierten Substrates eine im Vergleich zu den Flächen des lackierten Substrats erhöhte Anfälligkeit gegenüber Korrosion aufweisen. Um dieses Problem zu lösen, wird in der EP-A-259 181 empfohlen, dem Elektrotauchlack Polymer-Mikroteilchen zuzusetzen, die einen Erweichungspunkt, der mindestens 10°C über der Badtemperatur, einen Löslichkeitsparameter, der sich um nicht mehr als 1,0 vom Löslichkeitsparameter des kathodisch abscheidbaren Kunstharzes unterscheidet, einen Brechungsindex, der um 0,02 - 0,3 vom Brechungsindex des kathodisch abscheidbaren Kunstharzes abweicht oder eine Vernetzungsdichte von 0,01 - 5,05 mmol/g aufweisen, zuzusetzen. Gemäß der EP-A-433 783 sollen den Elektrotauchlacken Polymer-Mikroteilchen aus vernetzten Harnstoff-Aldehyd-, Triazin-Aldehyd- oder Phenol-Aldehyd-Harzen oder Polymerteilchen aus unvernetzten (Meth-)Acrylnitril Homo- oder Copolymeren zugesetzt werden.

Der Zusatz der in der EP-A-259 181 und EP-A-433 783 beschriebenen Polymer-Mikroteilchen zu Elektrotauchlacken führt in manchen Fällen zur Verbesserung der Kantenabdeckung. Trotz der verbesserten Kantenabdeckung ist die Korrosionsschutzwirkung der abgeschiedenen Elektrotauchlackfilme an der Kante jedoch unzureichend. Außerdem hat der Zusatz der in der EP-A-259 181-und EP-A-433 783 beschriebenen Polymer-Mikroteilchen nachteiligerweise eine Herabsetzung der Stabilität des Elektrotauchlackes (Auftreten von Sedimentationen im Elektrotauchlack), eine Verschlechterung der Haftung zum Substrat und/oder zu überlackierten Lackschichten, eine starke Verschlechterung des Verlaufs sowie eine Herabsetzung der Korrosionsschutzwirkung der abgeschiedenen Elektrotauchlackfilme zur Folge.

Die der vorliegenden Erfindung zugrundeliegende Aufgabenstellung besteht in der Bereitstellung von kathodisch abscheidbare Kunstharze enthaltenden wäßrigen Elektrotauchlacken, die Lackfilme mit gegenüber dem Stand der Technik verbesserten Eigenschaften liefern. Mit den bereitgestellten kathodisch abscheidbare Kunstharze enthaltenden wäßrigen Elektrotauchlacken sollen insbesonderen elektrisch leitfähige Substrate mit Hilfe des kathodischen Elektrotauchlackierverfahrens lackiert werden können und Lackfilme erhalten werden, die die Kanten des lackierten Substrats gut abdecken und wenigstens einen Teil der obenbeschriebenen Nachteile des Standes der Technik nicht bzw. nur im verminderten Ausmaß zeigen.

Diese Aufgabe wird überraschenderweise durch die Bereitstellung von kathodisch abscheidbare Kunstharze enthaltenden, wäßrigen Elektrotauchlacken gelöst, die dadurch gekennzeichnet sind, daß sie Polymermikroteilchen mit einer Teilchengröße von 0,01 bis 10 µm enthalten, die herstellbar sind, indem
(a) ein Polyisocyanat oder eine Mischung aus Polyisocyanaten mit
(b) einer organischen Verbindung, die pro Molekül sowohl mindestens eine ethylenisch ungesättigte Doppelbindung als auch mindestens ein aktives Wasserstoffatom enthält oder einer Mischung aus solchen organischen Verbindungen und
(c) einer organischen Verbindung, die pro Molekül sowohl mindestens ein aktives Wasserstoffatom als auch mindestens eine tertiäre Aminogruppe und/oder mindestens eine Ketimin- und/oder mindestens eine Aldiminigruppe enthält oder einer Mischung aus solchen organischen Verbindungen sowie gegebenenfalls
(d) einer von (b) und (c) verschiedenen organischen Verbindung, die pro Molekül mindestens ein aktives Wasserstoffatom enthält oder einer Mischung aus solchen organischen Verbindungen
in einem solchen Mengenverhältnis umgesetzt wird, daß 3 bis 80 Prozent der NCO-Gruppen der Komponente (a) mit der Komponente (b), 3 bis 80 Prozent der NCO-Gruppen der Komponente (a) mit der Komponente (c) und 0 bis 94 Prozent der NCO-Gruppen der Komponente (a) mit der Komponente (d) umgesetzt werden und das so erhaltene Umsetzungsprodukt in Wasser dispergiert und radikalisch polymerisiert wird, wobei vor, während oder nach der Dispergierung mindestens 5 Prozent der im Umsetzungsprodukt enthaltenen tertiären und/oder primären Aminogruppen mit einer Brönstedsäure neutralisiert werden.

Die erfindungsgemäßen Elektrotauchlacke können als kathodisch abscheidbare Kunstharze im Prinzip jedes für wäßrige Elektrotauchlacke geeignete wäßrige kathodisch abscheidbare Kunstharz enthalten. Die erfindungsgemäßen Elektrotauchlacke enthalten vorzugsweise kationische, aminmodifizierte Epoxidharze als kathodisch abscheidbare Kunstharze. Derartige Kunstharze sind bekannt und werden beispielsweise in der DE-A-35 18 770, DE-A-35 18 732, EP-B-102 501, DE-A-27 01 002, US-A-4,104,147, EP-A-4090, EP-A-12 463, US-A-4,031,050, US-A-3,922,253, US-A-4,101,486, US-A-4,038,232 und US-A-4,017,438 beschrieben. In diesen Patentdokumenten wird auch die Herstellung von kationischen, aminmodifizierten Epoxidharzen ausführlich beschrieben.

Unter kationischen, aminmodifizierte Epoxidharzen werden kationische Reaktionsprodukte aus
(α) ggf. modifizierten Polyepoxiden und
(β) Aminen
verstanden. Diese kationischen, aminmodifizierten Epoxidharze können durch Umsetzung der Komponenten (a) und (β) und - falls notwendig - anschließender Protonierung hergestellt werden. Es ist aber auch möglich, ein unmodifiziertes Polyepoxid mit einem Amin umzusetzen und an dem so erhaltenen aminmodifizierten Epoxidharz weitere Modifizierungen durchzuführen.

Unter Polyepoxiden werden Verbindungen verstanden, die zwei oder mehr Epoxidgruppen im Molekül enthalten.

Besonders bevorzugte (α)-Komponenten sind Verbindungen, die herstellbar sind durch Umsetzung von
(i) einer Diepoxidverbindung oder eines Gemisches von Diepoxidverbindungen mit einem Epoxidäquivalentgewicht unter 2000 mit
(ii) einer unter den gegebenen Reaktionsbedingungen gegenüber Epoxidgruppen monofunktionell reagierenden, eine Phenol- oder Thiolgruppe enthaltenden Verbindung oder eines Gemisches solcher Verbindungen,
wobei die Komponenten (i) und (ii) in einem Molverhältnis von 10 : 1 bis 1 : 1, bevorzugt 4 : 1 bis 1,5 : 1, eingesetzt werden und die Umsetzung der Komponente (i) mit der Komponente (ii) bei 100 bis 190 °C, gegebenenfalls in Anwesenheit eines Katalysators durchgeführt wird (vgl. DE-OS-35 18 770).

Weitere besonders bevorzugte (α)-Komponenten sind Verbindungen, die herstellbar sind durch eine bei 100 bis 195 °C, gegebenenfalls in Anwesenheit eines Katalysators durchgeführte, durch einen monofunktionell reagierenden Starter, der entweder eine alkoholische OH-Gruppe, eine phenolische OH-Gruppe oder eine SH-Gruppe trägt, initiierte Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von größer 2 : 1 bis 10 : 1 eingebaut sind (vgl. DE-OS 35 18 732).

Polyepoxide, die zur Herstellung der besonders bevorzugten (α)-Komponenten und auch selbst als (α)-Komponenten einsetzbar sind, sind aus Polyphenolen und Epihalohydrinen hergestellte Polyglycidylether von Polyphenolen. Als Polyphenole können z.B. ganz besonders bevorzugt Bisphenol A und Bisphenol F eingesetzt werden. Außerdem sind auch 4,4'-Dihydroxybenzophenon, Bis(4-hydroxyphenyl)1,1-ethan, Bis-(4-hydroxyphenyl)-1,1-isobutan, Bis-(4-hydroxy-tertiär-butylphenyl)-2,2-propan, Bis-(2-hydroxynaphthyl)-methan, 1,5-Dihydroxynaphthalin und phenolische Novolakharze geeignet.

Weitere geeignete Polyepoxide sind Polyglycidylether von mehrwertigen Alkoholen, wie z.B. Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl)-2,2-propan. Es können auch Polyglycidylester von Polycarbonsäuren, wie z.B. Oxalsäure, Bernsteinsäure, Glutarsäure, Terephthalsäure, 2,6-Naphthalindicarbonsäure und dimerisierte Linolsäure eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten aliphatischen Verbindung erhält.

Unter modifizierten Polyepoxiden werden Polyepoxide verstanden, in denen wenigstens ein Teil der reaktionsfähigen Gruppen mit einer modifizierenden Verbindung umgesetzt worden sind.

Als Beispiele für modifizierende Verbindungen werden genannt:
- Carboxylgruppenhaltige Verbindungen, wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z.B. Adipinsäure, Sebacinsäure, Isophthalsäure oder dimere Fettsäuren), Hydroxyalkylcarbonsäuren (z.B. Milchsäure, Dimethylolpropionsäure) sowie carboxylgruppenhaltige Polyester oder
- aminogruppenhaltige Verbindungen, wie Diethylamin oder Ethylhexylamin oder Diamine mit sekundären Aminogruppen, z.B. N,N'-Dialkylalkylendiamine, wie Dimethylethylendiamin, N,N'-Dialkyl-polyoxyalkylenamine, wie N,N'-Dimethylpolyoxypropylendiamin, cyanalkylierte Alkylendiamine, wie Bis-N,N'-Cyanethyl-ethylendiamin, cyanalkylierte Polyoxyalkylenamine, wie Bis-N,N'-Cyanethylpolyoxypropylendiamin, Polyaminoamide, wie z.B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren oder das Umsetzungsprodukt von einem Mol Diaminohexan mit zwei Molen Monoglycidylether oder Monoglycidylester, speziell Glycidylester α-verzweigter Fettsäuren, wie der Versaticsäure, oder
- hydroxylgruppenhaltige Verbindungen, wie Neopentylglykol, bisethoxyliertes Neopentylglykol, Hydroxypivalinsäureneopentylglykolester, Dimethylhydantoin-N,N'-diethanol, Hexandiol-1,6, Hexandiol-2,5, 1,4-Bis-(hydroxy-methyl)cyclohexan, 1,1-Isopropyliden-bis-(p-phenoxy)-2-propanol, Trimethylolpropan, Pentaerythrit oder Aminoalkohole, wie Triethanolamin, Methyldiethanolamin oder hydroxylgruppenhaltige Alkylketimine, wie Aminomethylpropandiol-1,3-methylisobutylketimin oder Tris-(hydroximethyl)aminomethancyclohexanonketimin sowie auch Polyglykolether, Polyesterpolyole, Polyetherpolyole, Polycaprolactonpolyole, Polycaprolactampolyole verschiedener Funktionalität und Molekulargewichte oder
- gesättigte oder ungesättigter Fettsäuremethylester, die in Gegenwart von Natriummethylat mit Hydroxylgruppen der Epoxidharze umgeestert werden.

Als Komponente (β) können primäre und/oder sekundäre Amine eingesetzt werden.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin und dgl.. Geeignet sind ebenfalls Alkanolamine, wie z.B. Methylethanolamin, Diethanolamin und dgl.. Ferner sind Dialkylaminoalkylamine, wie z.B. Dimethylaminoethylamin, Diethylaminopropylamin, Dimethylaminopropylamin und dgl. geeignet. Es können auch ketimingruppenhaltige Amine, wie z.B. das Methylisobutyldiketimin von Diethylentriamin eingesetzt werden. In den meisten Fällen werden niedermolekulare Amine verwendet, doch ist es auch möglich, höhermolekulare Monoamine anzuwenden.

Die Amine können auch noch andere Gruppen enthalten, doch sollen diese die Umsetzung des Amins mit der Epoxidgruppe nicht stören und auch nicht zu einer Gelierung der Reaktionsmischung führen.

Bevorzugt werden sekundäre Amine als (β)-Komponente eingesetzt.

Die für die Wasserverdünnbarkeit und elektrische Abscheidung erforderlichen Ladungen können durch Protonierung mit wasserlöslichen Säuren (z.B. Borsäure, Ameisensäure, Milchsäure, bevorzugt Essigsäure) erzeugt werden. Eine weitere Möglichkeit zur Einführung kationischer Gruppen besteht in der Umsetzung von Epoxidgruppen der Komponente (α) mit Aminsalzen.

Die in den erfindungsgemäßen Elektrotauchlacken enthaltenen kathodisch abscheidbaren Kunstharze sind in der Regel entweder selbstvernetzend und/oder werden mit einem Vernetzungsmittel oder einer Mischung aus Vernetzungsmitteln kombiniert.

Selbstvernetzbare Kunstharze sind erhältlich, indem in die Kunstharzmoleküle reaktive Gruppen eingeführt werden, die unter Einbrennbedingungen miteinander reagieren. Beispielsweise können in hydroxyl- und/oder aminogruppenhaltige Kunstharze blockierte Isocyanatgruppen eingeführt werden, die unter Einbrennbedingungen deblockieren und unter Ausbildung von vernetzten Lackfilmen mit den Hydroxyl- bzw. Aminogruppen reagieren. Selbstvernetzbare Kunstharze können beispielsweise durch Umsetzung eines hydroxyl- und/oder aminogruppenhaltigen Kunstharzes mit einem teilblockierten Polyisocyanat, das im statistischen Mittel eine freie NCO-Gruppe pro Molekül enthält, erhalten werden.

Die erfindungsgemäßen Elektrotauchlacke können im Prinzip alle für Elektrotauchlacke geeigneten Vernetzungsmittel wie z.B. Phenoplaste, polyfunktionelle Mannichbasen, Melaminharze, Benzoguanaminharze, blockierte Polyisocyanate und aktivierte Estergruppen enthaltende Verbindungen enthalten. Die erfindungsgemäßen Elektrotauchlacke enthalten vorzugsweise blockierte Polyisocyanate als Vernetzungsmittel. Der Einsatz blockierter Polyisocyanate in kathodisch abscheidbare Kunstharze enthaltenden Elektrotauchlacken ist schon lange bekannt und unter anderem auch in den oben zitierten Patentdokumenten ausführlich beschrieben. Geeignete blockierte Polyisocyanate können beispielsweise hergestellt werden, indem die unten beschriebene Komponente (a) mit der unten beschriebenen Komponente (d) zu einem NCO-gruppenfreien Produkt umgesetzt wird.

Es ist erfindungswesentlich, daß die erfindungsgemäßen Elektrotauchlacke Polymermikroteilchen enthalten, die herstellbar sind, indem
(a) ein Polyisocyanat oder eine Mischung aus Polyisocyanaten mit
(b) einer organischen Verbindung, die pro Molekül sowohl mindestens eine ethylenisch ungesättigte Doppelbindung als auch mindestens ein aktives Wasserstoffatom enthält oder einer Mischung aus solchen organischen Verbindungen und
(c) einer organischen Verbindung, die pro Molekül sowohl mindestens ein aktives Wasserstoffatom als auch mindestens eine tertiäre Aminogruppe und/oder mindestens eine Ketimin- und/oder mindestens eine Aldimingruppe enthält oder einer Mischung aus solchen organischen Verbindungen sowie gegebenenfalls
(d) einer von (b) und (c) verschiedenen organischen Verbindung, die pro Molekül mindestens ein aktives Wasserstoffatom enthält oder einer Mischung aus solchen organischen Verbindungen
in einem solchen Mengenverhältnis umgesetzt wird, daß 3 bis 80, vorzugsweise 5 bis 40 Prozent der NCO-Gruppen der Komponente (a) mit der Komponente (b), 3 bis 80, vorzugsweise 3 bis 15 Prozent der NCO-Gruppen der Komponente (a) mit der Komponente (c) und 0 bis 94, vorzugsweise 45 bis 92 Prozent der NCO-Gruppen der Komponente (a) mit der Komponente (d) umgesetzt werden und das so erhaltene Umsetzungsprodukt in Wasser dispergiert und radikalisch polymerisiert wird, wobei vor, während oder nach der Dispergierung mindestens 5 Prozent, vorzugsweise mindestens 10 Prozent der im Umsetzungsprodukt enthaltenen tertiären und/oder primären Aminogruppen mit einer Brönstedsäure neutralisiert werden.

Die Umsetzung der Komponenten (a), (b), (c) und gegebenenfalls (d) kann sowohl in Substanz als auch in organischen Lösemitteln, wie z.B. Kohlenwasserstoffen, wie Toluol ode Xylol, Ketonen, wie Methylethylketon oder Methylisobutylketon oder Ethern, wie Dioxan und Ethylenglykoldibutylether durchgeführt werden. Die Umsetzung wird vorzugsweise in organischen Lösemitteln durchgeführt. Die Reaktionstemperatur beträgt üblicherweise 30 bis 150, vorzugsweise 40 bis 100°C. Die Umsetzung kann auch katalysiert werden. Als Beispiele für geeignete Katalysatoren werden organische Zinnverbindungen, wie Dibutylzinndilaurat und Dibutylzinnoxid genannt. Die Umsetzung wird vorzugsweise in Gegenwart eines Polymerisationsinibitors wie z.B. Di-tert-butylkresol, Pentaerythrityltetrakis[3-(3,5-di-tert.butyl-4-hydroxyphenyl)-propionat] (Irganox 1010 der Firma Ciba Geigy) oder p-Benzochinon durchgeführt.

Die Auswahl des Mengenverhältnisses in dem die Komponenten (a), (b), (c) und gegebenenfalls (d) miteinander umzusetzen sind, damit 3 bis 80, vorzugsweise 5 bis 40 Prozent der NCO-Gruppen der Komponente (a) mit der Komponente (b), 3 bis 80, vorzugsweise 3 bis 15 Prozent der NCO-Gruppen der Komponente (a) mit der Komponente (c) und 0 bis 94, vorzugsweise 45 bis 92 Prozent der NCO-Gruppen der Komponente (a) mit der Komponente (d) umgesetzt werden, ist für den Fachmann mittels stöchimetrischer Berechnungen leicht möglich. In manchen Fällen kann es vorteilhaft sein, die Komponenten (a), (b), (c) und gegebenenfalls (d) stufenweise umzusetzen.

Nach Umsetzung der Komponenten (a), (b), (c) und gegebenenfalls (d) wird das erhaltene Umsetzungsprodukt in Wasser dispergiert und anschließend radikalisch polymerisiert. Um eine stabile wäßrige Dispersion zu erhalten, wird vor, während oder nach der Dispergierung so viel einer Brönstedsäure oder einer Mischung aus Brönstedsäuren zu dem Umsetzungsprodukt gegeben, daß mindestens 5 Prozent, vorzugsweise mindestens 10 Prozent der im Umsetzungsprodukt enthaltenen tertiären und/oder primären Aminogruppen mit einer Brönstedsäure neutralisiert werden. Die primären Aminogruppen entstehen durch Hydrolyse der Ketimin- und/oder Aldimingruppen. Als Brönsted-Säuren können beispielsweise Essigsäure, Milchsäure, Oxalsäure, Weinsäure oder Mischungen aus diesen Brönsted-Säuren eingesetzt werden.

Das Umsetzungsprodukt enthält im allgemeinen 0,1 bis 2,3, vorzugsweise 0,2 bis 0,8 mmol/g (bezogen auf Feststoff) kationische Gruppen in Form von protonierten tertiären und/oder primären Aminogruppen.

Die radikalische Polymerisation des Umsetzungsproduktes erfolgt durch Zugabe eines freie Radikale bildenden Polymerisationsinitiators oder einer Mischung aus freie Radikale bildenden Polymerisationsinitiatoren. Freie Radikale bildende Polymerisationsinitiatoren sind Verbindungen, die nach Zuführung von Energie, beispielsweise durch Bestrahlung oder Zuführung von thermischer Energie (d. h. durch Erhitzen), in freie Radikale zerfallen und die Polymerisation der durch die Komponente (b) in das Umsetzungsprodukt eingeführten ethylenisch ungesättigten Doppelbindungen initiieren. Darüber hinaus können Redox-Systeme eingesetzt werden. Der Zeitpunkt, zu dem der freie Radikale bildende Polymerisationsinitiator bzw. die Mischung aus freie Radikale bildenden Polymerisationsinitiatoren zu dem Umsetzungsprodukt gegeben wird, ist so zu wählen, daß die radikalische Polymerisation des Umsetzungsproduktes erst nach der Dispergierung des Umsetzungsproduktes in Wasser erfolgt. Als freie Radikale bildende Polymerisationsinitiatoren werden vorzugsweise freie Radikale bildende Polymerisationsinitiatoren eingesetzt, die durch Zuführung von thermischer Energie in freie Radikale zerfallen. Besonders bevorzugt werden freie Radikale bildende Polymerisationsinitiatoren eingesetzt, die ab Temperaturen von 50°C freie Radikale bilden.

Als freie Radikale bildende Polymerisationsinitiatoren können beispielsweise Azoverbindungen, wie zum Beispiel Azobisisobutyronitril, Azobisisovaleronitril, Perverbindungen wie zum Beispiel Dilauroylperoxid, Diacetylperoxydicarbonat, tert-Butylperoxydiethylacetat und Dibenzoylperoxid und Redoxsysteme, wie zum Beispiel Wasserstoffperoxid oder Kaliumperoxidisulfat in Kombination mit Eisen(II)-Sulfat und Natriumsulfit, eingesetzt werden.

Als Komponente (a) kann im Prinzip jede organische Verbindung, die im statistischen Mittel mindestes 1,1 NCO-Gruppen pro Molekül enthält oder eine Mischung aus solchen organischen Verbindungen eingesetzt werden. Als Komponente (a) wird vorzugsweise ein Polyisocyanat, das im statistischen Mittel 1,1 bis 3,0 NCO-Gruppen pro Molekül enthält oder eine Mischung aus solchen Polyisocyanaten eingesetzt. Als Komponente (a) können aliphatische, cycloaliphatische oder aromatische Polyisocyanate, aus diesen Polyisocyanaten hergestellte cyanurat- und/oder biuretgruppenhaltigen Additionsprodukte sowie aus diesen Polyisocyanaten und hydroxyl- und/oder aminogruppenhaltigen nieder- oder höhermolekularen Verbindungen (beispielsweise Trimethylolpropan, Polyesterpolyole und Polyetherpolyole) hergestellte NCO-gruppenhaltigen Präpolymere eingesetzt werden. Als Beispiele für einsetzbare Polyisocyanate werden genannt: 2,4- und 2,6-Toluylendiisocyanat, Isophorondiisocyanat, Hexamethylendiisocyanat, 4,4'- und 2,4'-Diphenylmethandiisocyanat. Es können auch carbodiimid- bzw. uretonimingruppenhaltige Polyisocyanate als Komponente (a) eingesetzt werden.

Als Komponente (b) kann im Prinzip jede organische Verbindung, die pro Molekül sowohl mindestens eine ethylenisch ungesättigte Doppelbindung als auch mindestens ein aktives Wasserstoffatom enthält oder eine Mischung aus solchen organischen Verbindungen eingesetzt werden. Unter aktiven Wasserstoffatomen werden mit NCO-Gruppen reaktive Wasserstoffatome verstanden. Als Komponente (b) kann beispielsweise eine organische Verbindung eingesetzt werden, die pro Molekül sowohl eine ethylenisch ungesättigte Doppelbindung als auch eine Hydroxyl-, eine Amino- oder eine Mercaptogruppe enthält.

Als Komponente (b) wird bevorzugt ein Derivat der Acrylsäure oder Methacrylsäure, das eine Hydroxyl- oder eine Mercaptogruppe, vorzugsweise eine Hydroxylgruppe enthält oder eine Mischung aus solchen Derivaten der Acrylsäure oder Methacrylsäure eingesetzt. Als Beispiele für einsetzbare Acryl- oder Methacrylsäurederivate werden genannt: 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 4-Hydroxybutylacrylat, 4-Hydroxybutylmethacrylat und deren ethoxylierten oder propoxylierten Derivate, die 1 - 50, vorzugsweise 1 - 8, besonders bevorzugt 1 - 3, Alkylenoxid-Einheiten enthalten. Als Komponente (b) wird ganz besonders bevorzugt ein Hydroxyalkylester der Acrylsäure oder Methacrylsäure oder eine Mischung aus Hydroxyalkylestern der Acrylsäure oder Methacrylsäure eingesetzt. Die Hydroxyalkylester weisen in der Regel 1 bis 6, vorzugsweise 2 bis 4 C-Atome im Alkoholrest auf. Als Beispiele für ganz besonders bevorzugt eingesetzte Hydroxyalkylester werden genannt:
2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 4-Hydroxybutylacrylat und 4-Hydroxybutylmethacrylat.

Als Komponente (c) kann im Prinzip jede organische Verbindung, die pro Molekül sowohl mindestens ein aktives Wasserstoffatom als auch mindestens eine tertiäre Aminogruppe und/oder mindestens eine Ketimin- und/oder mindestens eine Aldimingruppe enthält oder eine Mischung aus solchen organischen Verbindungen eingesetzt werden. Unter aktiven Wasserstoffatomen werden mit NCO-Gruppen reaktive Wasserstoffatome verstanden. Die ketimin- oder aldimingruppenhaltige Verbindungen sind erhältlich, indem Verbindungen, die sowohl ein gegenüber NCO-Gruppen aktives Wasserstoffatom als auch mindestens eine primäre Aminogruppe im Molekül enthalten mit einem Keton, wie z. B. Aceton, Methylethylketon oder Methylisobutylketon oder einem Aldehyd, vorzugsweise in einem organischen Lösungsmittel; wie z. B. Xylol, Toluol oder n-Hexan, umgesetzt werden. Die Reaktion wird üblicherweise bei erhöhten Temperaturen durchgeführt, wobei das Reaktionswasser durch azeotrope Destillation entfernt wird.

Als Komponente (c) kann beispielsweise eine organische Verbindung eingesetzt werden, die pro Molekül sowohl eine Hydroxyl-, eine Amino- oder eine Mercaptogruppe als auch mindestens eine tertiäre Aminogruppe und/oder mindestens eine Ketimin- und/oder mindestens eine Aldimingruppe enthält. Dabei sind Verbindungen, die pro Molekül sowohl eine Hydroxyl-, eine primäre Amino- oder eine sekundäre Aminogruppe als auch eine tertiäre Aminogruppe oder eine Ketimingruppe enthalten, bevorzugt. Als Beispiele für derartige Verbindungen werden genannt: N,N-Dimethylethanolamin, N,N-Diethylethanolamin, N,N-Butylethylpropanolamin, N,N-Dimethylaminoethylamin, N,N-Diethylaminoethylamin, N,N-Dimethylaminopropylamin, N,N-Diethylaminopropylamin, N,N-Dimethylaminoethyl-mercaptan, N,N-Diethylaminoethylmercaptan und Umsetzungsprodukte aus Aceton, Methylethylketon, Methylisobutylketon, Dihydroisophoron oder Isophoron mit β-Aminoethanol, β-Aminomercaptan, 2,2'-Aminoethoxyethanol, N-Aminoethylpiperazin, Diethylentriamin, Dipropylentriamin und Dibutylentriamin.

Als Komponente (c) werden besonders bevorzugt Verbindungen der allgemeinen Formel A-R³-X (I) eingesetzt, wobei A für eine Gruppe der allgemeinen Formel R¹R²N-oder R¹R²C = N- steht, R³ für einen Alkylenrest mit 1 bis 20, vorzugsweise 2 bis 6, besonders bevorzugt 2 bis 4 C-Atomen oder für eine Gruppe der allgemeinen Formel -R⁴-O-R⁵- steht und X für eine Hydroxylgruppe, eine primäre Aminogruppe oder eine Gruppe der allgemeinen Formel -NH-R⁶ steht, wobei R¹ und R² gleich oder verschieden sein können und jeweils für einen Kohlenwasserstoffrest mit 1 bis 20, vorzugsweise 1 bis 6, besonders bevorzugt jeweils für einen Alkylrest mit 1 bis 6, vorzugsweise 1 bis 4 C-Atomen stehen, R⁴ und R⁵ gleich oder verschieden sein können und jeweils für einen Alkylenrest mit 1 bis 12, vorzugsweise 1 bis 6, besonders bevorzugt 1 bis 4 C-Atomen stehen und R⁶ für einen Kohlenwasserstoffrest mit 1 bis 20, vorzugsweise 1 bis 6, besonders bevorzugt für einen Alkylrest mit 1 bis 6, vorzugsweise 1 bis 4 C-Atomen oder für eine Gruppe der allgemeinen Formel -R³-A steht, wobei A und R³ die oben erläuterte Bedeutung haben. Als Beispiele für Verbindungen der allgemeinen Formel (I) werden genannt: N,N-Dimethylethanolamin, N,N-Diethylethanolamin, N,N-Dimethylpropanolamin, N,N-Diethylpropanolamin, N,N-Butylethylpropanolamin, N,N-Dimethylaminoethylamin, N,N-Dimethylaminopropylamin, N,N-Diethylaminoethylamin, N,N-Diethylaminopropylamin und Reaktionsprodukte aus Aceton, Methylethylketon, Methylisobutylketon, Dihydroisophoron oder Isophoron mit β-Aminoethanol, 2,2'-Aminoethoxyethanol, N-Aminoethylpiperazin, Diethylentriamin und Dipropylentriamin.

Als Komponente (d) kann im Prinzip jede von (b) und (c) verschiedene organische Verbindung eingesetzt werden, die pro Molekül mindestens ein aktives Wasserstoffatom enthält oder eine Mischung aus solchen organischen Verbindungen eingesetzt werden. Als Komponente (d) werden vorzugsweise gut bekannte Blockierungsmittel für Polyisocyanate eingesetzt. Als Beispiele werden genannt: Aliphatische Monoether von Alkandiolen, wie Ethyl-, Propyl- und Butylglykol; aliphatische Monoalkohole mit 1 bis 4 C-Atomen im Molekül wie Methanol, Ethanol, Propanol und Butanol; cycloaliphatische Monoalkohole, wie cyclohexanol; aromatische Alkylalkohole, wie Phenylcarbinol; phenolverbindungen, wie Phenol selbst und substituierte Phenole, wie Cresol, Nitrophenol, Chlorphenol und Ethylphenol; Amine, wie Di-n-butylamin, Di-sec.-butylamin, Dicyclohexylamin, Piperidin, 2-Methylpiperidin und 2,6-Dimethylpiperidin; Oxime, wie Acetonoxim, Butanonoxim, Diethylketoxim, Methylethylketoxim, Methylisobutylketoxim, Diisopropylketoxim, Cyclohexanonoxim, 2-Methylcyclohexanonoxim, 2,6-Dimethylcyclohexanonoxim, Acetophenonoxim; Lactame, wie ε-Caprolactam und CH-acide Verbindungen, wie Dialkylmalonate, Alkylacetoacetate, Acetylaceton; heterocyclische Verbindungen, wie Furfurylalkohol usw. Als Komponente (d) können auch Polyole, vorzugsweise aliphatische Polyole, die 2 bis 20, vorzugsweise 2 bis 10 C-Atome und 2 bis 5, vorzugsweise 2 bis 3 Hydroxylgruppen pro Molekül enthalten, wie z. B. Ethylenglykol, Propandiol, Butandiol, Hexandiol, Glycerin, und Trimethylolpropan eingesetzt werden. Als Komponente (d) können desweiteren hydroxylgruppenhaltige Polyethylenoxide, Polypropylenoxide, Polytetramethylenoxide und deren Copolymere eingesetzt werden.

Die erfindungsmäßen wäßrigen Elektrotauchlacke können neben den oben beschriebenen Komponenten auch noch weitere übliche Lackbestandteile wie z.B. organische Lösemittel, Pigmente, Füllstoffe, Netzmittel, Antikrateradditive usw. enthalten.

Der Feststoffgehalt der erfindungsgemäßen Elektrotauchlacke beträgt im allgemeinen 5 bis 40, vorzugsweise 10 bis 40, besonders bevorzugt 20 bis 40 Gewichtsprozent.

Der nichtflüchtige Anteil der erfindungsgemäßen Elektrotauchlacke besteht zu 35 bis 70, vorzugsweise 35 bis 65 Gew.-% aus einem kathodisch abscheidbaren Kunstharz oder einer Mischung aus kathodisch abscheidbaren Kunstharzen, zu 0 bis 45, vorzugsweise 10 bis 35 Gew.-% aus einem von den erfindungsgemäß eingesetzten Polymer-mikroteilchen verschiedenen Vernetzungsmittel oder einer Mischung aus von den erfindungsgemäß eingesetzten polymermikroteilchen verschiedenen Vernetzungsmitteln, zu 5 bis 45, vorzugsweise 10 bis 20 Gew.-% aus den erfindungsgemäß eingesetzten Polymermikroteilchen sowie zu 5 bis 35, vorzugsweise 15 bis 35 Gew.-% aus Pigmenten und/oder Füllstoffen.

Die erfindungsgemäßen Elektrotauchlacke werden zum Lackieren elektrisch leitfähiger Substrate eingesetzt, bei dem
(1) das elektrisch leitfähige Substrat in einen wäßrigen Elektrotauchlack getaucht wird,
(2) das Substrat als Kathode geschaltet wird,
(3) durch Gleichstrom ein Film auf dem Substrat abgeschieden wird,
(4) das lackierte Substrat aus dem Elektrotauchlack entfernt wird und
(5) der abgeschiedene Lackfilm eingebrannt wird.

Das obenbeschriebene Verfahren ist bekannt und wird schon seit mehreren Jahren im großen Umfang eingesetzt (vergleiche auch die oben zitierten Patentdokumente). Die angelegte Spannung kann in einem großen Bereich schwanken und kann zum Beispiel zwischen 2 und 1000 V liegen. Typischerweise wird aber mit Spannungen zwischen 5o und 500 V gearbeitet. Die Stromdichte liegt in der Regel zwischen etwa 10 und 100 A/m². Im Verlauf der Abscheidung neigt die Stromdichte zum Abfallen. Sobald der Lackfilm auf dem Substrat abgeschieden ist, wird das lackierte Substrat aus dem Elektrotauchlack entfernt und abgespült. Danach wird der abgeschiedene Lackfilm eingebrannt. Die Einbrenntemperaturen liegen überlicherweise bei 130 bis 200 °C, vorzugsweise bei 150 bis 180 °C und die Einbrenndauer liegt im allgemeinen zwischen 10 und 60 min., vorzugsweise zwischen 15 und 30 min.

Mit dem obenbeschriebenen Verfahren können im Prinzip _ _ alle elektrisch leitfähigen Substrate lackiert werden. Als Beispiele für elektrisch leitfähige Substrate werden Substrate aus Metall, wie Stahl, Aluminium, Kupfer und dergleichen genannt.

Die Erfindung wird in den folgenden Beispielen näher erläutert. Alle Angaben über Teile und Prozentsätze sind Gewichtsangaben, falls nicht ausdrücklich etwas anderes festgestellt wird.

### 1. Herstellung von Vernetzungsmitteln

### 1.1 Vernetzungsmittel I

In einem Reaktor, der mit einem Rührer, Rückflußkühler, Innenthermometer und Inertgaseinleitung ausgestattet ist, werden 1046 g Isomere und höherfunktionelle Oligomere auf Basis von 4,4'-Diphenylmethandiisocyanat mit einem NCO-Equivalentgewicht von 135 (Lupranat® M20S, Fa. BASF; NCO-Funktionalität ca. 2,7; Gehalt an 2,2'- und 2,4'-Diphenylmethandiisocyanat unter 5%) unter Stickstoffatmosphäre vorgelegt. Man gibt 2 g Dibutylzinndilaurat zu und tropft 963 g Butyldiglycol mit einer solchen Geschwindigkeit zu, daß die Produkttemperatur unter 60°C bleibt. Gegebenenfalls muß gekühlt werden. Nach Ende der Zugabe wird die Temperatur weitere 60 min bei 60°C gehalten und ein NCO-Equivalentgewicht von 1120 bestimmt (bezogen auf Festanteile). Nach Anlösung in 774 g Methylisobutylketon und Zugabe von 3 g Dibutylzinndilaurat werden 87 g geschmolzenes Trimethylolpropan in einer solchen Geschwindigkeit zugegeben, daß eine Produkttemperatur von 100°C nicht überschritten wird. Nach Zugabeende läßt man weitere 60 min nachreagieren. Bei der nachfolgenden Kontrolle sind keine NCO-Gruppen mehr nachweisbar. Man kühlt auf 65°C ab und verdünnt gleichzeitig mit 96 g sec-Butanol und 30 g Methylisobutylketon. Der Feststoffgehalt liegt bei 70,1 % (1 h bei 130°C).

### 1.2 Vernetzungsmittel II

In einem Reaktor, wie er im vorstehenden Beispiel beschrieben ist, werden unter Stickstoffatmosphäre 1464 g trimerisiertes Hexamethylendiisocyanat mit einem NCO-Equivalentgewicht von 191 ("Basonat® PLR 8638", Fa. BASF) und 510 g Methylisobutylketon unter Rühren auf 50°C erwärmt. Während 4 h werden nun 936 g Di-n-butylamin zugetropft. Die Temperatur wird dabei durch Kühlung unter 55°C gehalten. Die Vernetzungsmittellösung wird anschließend gekühlt und mit 90 g n-Butanol verdünnt. Bei der anschließenden Kontrolle sind keine NCO-Gruppen nachweisbar. Der Feststoffgehalt liegt bei 79,8 % (1 h bei 130°C gemessen).

### 2. Herstellung einer wäßrigen Dispersion, die ein kathodisch abscheidbares Kunstharz und eine Mischung aus Vernetzunasmitteln enthält

In einem Reaktor werden 1228 Teile Epoxidharz auf Basis von Bisphenol A mit einen Epoxy-Equivalentgewicht (EEW) von 188 zusammen mit 279 Teilen Bisphenol A, 268 Teilen Dodecylphenol und 89 Teilen Xylol unter Stickstoffatmosphäre auf 105°C aufgeheizt. Mit Hilfe eines Wasserabscheiders werden 20 min durch azetrope Rückflußdestillation im Vakuum Wasserspuren ausgekreist. Anschließend heizt man auf 130°C und gibt 5 Teile N,N-Dimethylbenzylamin zu. Bei dieser Temperatur wird der Reaktionsansatz gehalten, bis das EEW einen Wert von 870 erreicht hat. Man gibt nun 39 Teile Butylglycol, 204 Teile sec-Butanol und - nach Kühlung unter 115°C - 139 Teile Diethanolamin zu und kühlt weiter auf 90°C ab. Eine Stunde nach Aminzugabe setzt man 192 Teile Plastilit 3060 (Propylenglykolverbindung, Fa. BASF) zu und verdünnt mit 144 Teilen sec- Butanol und 55 Teilen Propylenglycolphenylether und kühlt gleichzeitig rasch auf 65°C ab. Danach gibt man 39 Teile N,N-Dimethylaminopropylamin zu, hält die Temperatur eine halbe Stunde und erwärmt anschließend auf 90°C. Diese Temperatur wird für 1,5 Stunden gehalten. Dann wird auf 70°C abgekühlt. Zum Reaktionsgemisch werden 743 Teile Vernetzungsmittel I (Punkt 1.1) und 650 Teile Vernetzungsmittel II (Punkt 1.2) zugesetzt, 10 min homogenisiert und in ein Dispergiergefäß überführt. Dort gibt man portionsweise unter Rühren 107 Teile Milchsäure (88%ig in Wasser) in 2203 Teilen deionisiertem Wasser zu. Anschließend wird 20 min homogenisiert, bevor mit weiteren 3593 Teilen entionisiertem Wasser in kleinen Portionen weiter verdünnt wird.

Durch Destillation im Vakuum werden die flüchtigen Lösemittel entfernt und anschließend mengengleich durch deionisiertes Wasser ersetzt. Die Dispersion besitzt folgende Kennzahlen:

| | |
|---|---|
| Feststoffgehalt | 32 % (1 Std. bei 130°C) |
| Basengehalt | 0,66 Milliequivalente/g Festkörper |
| Säuregehalt | 0,25 Milliequivalente/g Festkörper |
| pH | 6,1 |

### 3. Herstellung einer grauen Pigmentpaste

2781 Teile Bisphenol-A-diglycidylether, 144 Teile Xylol und 581 Teile Bisphenol-A werden in Gegenwart von 0,2 Teilen Triphenylphosphin bei 150 - 160°C bis zu einem EEW von 345 umgesetzt. Der Ansatz wird dann mit 2161 Teilen Butylglycol verdünnt und auf 49°C gekühlt. Dann wird eine Mischung aus 777 Teilen 9-Amino-3,6-dioxanonan-1-ol und 407 Teilen N,N-Dimethylaminopropylamin innerhalb von 6 min zugeben, worauf die Temperatur auf 110°C steigt. Man hält die Mischung eine Stunde zwischen 110 und 115°C bevor 645 Teile Butylglycol zugegeben werden und der Ansatz auf 77°C gekühlt wird. Anschließend werden 149 Teile Nonylphenolglycidether zugegeben. Die Temperatur steigt daraufhin auf 90°C an und wird dort eine Stunde lang gehalten, bevor mit 1003 Teilen Butylglycol verdünnt und gekühlt wird. Der Feststoffgehalt der dünnflüssigen Harzlösung liegt bei 60%.

Zur Herstellung der Pigmentpaste werden zunächst 280 Teile Wasser und 250 Teile der vorstehend beschriebenen Harzlösung vorgemischt. Nun werden 5 Teile Ruß, 35 Teile basisches Bleipigment, 90 Teile Extender HEWP¹⁾, 315 Teile Titandioxid (R 900), 5 Teile Bentone EW²⁾ und 20 Teile Dibutylzinnoxid zugegeben. Die Mischung wird 30 min lang unter einem schnellaufenden Dissolverrührwerk vordispergiert. Anschließend wird die Mischung in einer Laborkleinmühle (Motor Mini Mill, Eiger Engineering Ltd., Great Britain) während 1 bis 1,5 h bis zu einer Hegmann-Feinheit von kleiner/gleich 12 dispergiert und mit weiterem Wasser auf Verarbeitungsviskosität eingestellt.
Es wird eine entmischungsstabile Pigmentpaste erhalten.
¹⁾ English China Clay Int., Great Britain
²⁾ Rheox, Deutschland

### 4. Herstellung wäßriger Dispersionen, die die erfindungsgemäß eingesetzten Polymermikroteilchen enthalten

### 4.1 Herstellung der Dispersion I

In einem Reaktor, der mit einem Rührer, Rückflußkühler, Innenthermometer und Inertgasleitung ausgestattet ist, werden 1021 g Toluylendiisocyanat (Mischung aus etwa 80 Gew% 2,4- und 20 Gew% 2,6-Isomeren) und 180 g Methylisobutylketon unter Stickstoffatmosphäre vorgelegt. Man gibt 0,4 g Dibutylzinndilaurat zu und trägt innerhalb von einer Stunde eine auf 70°C temperierte Lösung von 254 g Trimethylolpropan in 254 g Methylisobutylketon ein. Die Kühlung wird so reguliert, daß die Temperatur 60°C nicht überschreitet.
30 min nach Zugabeende wird ein NCO-Equivalentgewicht von 217 gemessen, bezogen auf Festkörper. Unter weiterer Kühlung läßt man innerhalb von 20 min 102 g n-Propylglycol zutropfen, wobei der Temperaturanstieg auf 55°C begrenzt wird. Anschließend wird das Reaktionsgemisch auf 40°C abgekühlt. Zum Reaktorinhalt werden 564 g Hydoxypropylmethacrylat, in dem zuvor 0,4 g Di-tert-butyl-p-kresol gelöst wurden, hinzugetropft. Die Geschwindigkeit der Zugabe wird so geregelt, daß die Temperatur des Reaktionsgemischs 50°C nicht überschreitet. Nach Zugabeende (ca. nach einer Stunde) wird der Ansatz auf 50°C gehalten und ein NCO-Equivalentgewicht von 1670, bezogen auf Festanteil, bestimmt. Nach gleichzeitiger Zugabe von 433 g Methylisobutylketon und Kühlung auf 35°C werden zum Reaktionsgemisch 115 g N,N-Diethylethanolamin in einer Portion zugesetzt. Nach 30 min werden weitere 0,6 g Di-tert-butyl-p-kresol in 20 g sec-Butanol zugegeben. Sobald keine NCO-Gruppen mehr nachgewiesen werden können, versetzt man das Reak-tionsgemisch mit 16 g Azobisisovaleronitril, welches zuvor in 39 g Methylisobutylketon gelöst wurde. 1309 Teile der so erhaltenen organischen Lösung werden in einem Dispergiergefäß mit 492 Teilen deionisiertem Wasser, das 35 Teile Milchsäure (88 %ig in Wasser) enthält, versetzt. Anschließend wird 20 min lang homogenisiert, mit weiteren 995 Teilen deionisiertem Wasser unter Rühren verdünnt, auf 70°C erhitzt und 10 Stunden lang bei dieser Temperatur gerührt. Die so erhaltene Dispersion hat einen Feststoffgehalt von 32,2 % (1 h, 130°C).

### 4.2 Dispersion II

### 4.2.1 Herstellung einer organischen Verbindung, die pro Molekül sowohl ein aktives Wasserstoffatom als auch eine Ketimingruppe enthält

In einem Reaktor, ausgestattet mit Rührer, Inertgasleitung, Wasserabscheider und Rückflußkühler werden 1100 g 2,2'-Aminoethoxyethanol (H₂N-CH₂CH₂-O-CH₂CH₂-OH) und 1886 g Methylisobutylketon vorgelegt und in einer Stickstoffatmosphäre unter Rühren langsam aufgeheizt. Ab 109°C wird Kondensationswasser abgeschieden. Man steigert die Temperatur in kleinen Schritten innerhalb von 3 h bis auf 142°C und hält bei dieser Temperatur, bis 189 g Wasser ausgekreist sind. Anschließend wird auf 40°C gekühlt und unter Stickstoff ausgetragen.

Die erkaltete Lösung weist ein Aminequivalentgewicht von 265 auf.

### 4.2.2 Herstellung der Dispersion II

In einem Reaktor, der mit einem Rührer, Rückflußkühler, Innenthermometer und Inertgasleitung ausgestattet ist, werden 992 g Toluylendiisocyanat (Mischung aus etwa 80 Gew% 2,4- und 20 Gew% 2,6-Isomeren) und 175 g Methylisobutylketon unter Stickstoffatmosphäre vorgelegt. Man gibt 0,4 g Dibutylzinndilaurat zu und trägt innerhalb von 1 Stunde eine auf 70°C temperierte Lösung von 247 g Trimethylolpropan in 247 g Methylisobutylketon ein. Die Kühlung wird so reguliert, daß die Temperatur 60°C nicht überschreitet.
30 min nach Zugabeende wird ein NCO-Equivalentgewicht von 208 gemessen (bezogen auf Festkörper). Unter weiterer Kühlung läßt man innerhalb von 20 min 119 g n-Propylglykol zutropfen, wobei der Temperaturanstieg auf 55°C begrenzt wird. Anschließend wird das Reak-tionsgemisch auf 40°C abgekühlt. Zum Reaktorinhalt werden 548 g Hydoxypropylmethacrylat, in dem zuvor 0,4 g Di-tert-butyl-p-kresol gelöst wurden, hinzugetropft. Die Geschwindigkeit der Zugabe wird so geregelt, daß die Temperatur des Reaktionsgemisches 50°C nicht überschreitet. Nach Zugabeende (ca. nach 1 h) wird der Ansatz weiter auf 50°C gehalten und ein NCO-Equivalentgewicht von 2015, bezogen auf Festanteil, bestimmt. Nach gleichzeitiger Zucabe von 420 g Methylisobutylketon und Kühlung auf 35°C werden zum Reak-tionsgemisch 178 g des in Punkt 4.2.1 beschriebenen Umsetzungsprodukts aus 2,2'-Aminoethoxyethanol und Methylisobutylketon in einer Portion zugesetzt. Nach 30 min werden weitere 0,6 g Di-tert-butyl-p-kresol in 19 g sec-Butanol zugegebene. Sobald keine NCO-Gruppen mehr nachgewiesen werden können, versetzt man das Reak-tionsgemisch mit 16 g Azobisisobutyronitril, welches zuvor in 38 g Methylisobutylketon gelöst wurde. 2142 Teile der so erhaltenen organischen Lösung werden in einem Dispergiergefäß mit 1718 Teilen deionisiertem Wasser, das 57 Teile Milchsäure (88 %ig in Wasser) enthält, versetzt. Anschließend werden 25 Teile Butylglykol zugesetzt und 20 min lang homogenisiert. Die Mischung wird mit weiteren 3488 Teilen deionisiertem Wasser unter Rühren weiter verdünnt, auf 70°C erhitzt und 10 Stunden lang bei dieser Temperatur gerührt. Die so erhaltene Dispersion hat einen Feststoffgehalt von 20,4 % (1 h, 130°C).

### 5. Herstellung und Abscheidung erfindunasgemäßer Elektrotauchlacke

### 5.1 Elektrotauchlack (I)

2078 Teile der Dispersion gemäß Punkt 2. und 516 Teile der Dispersion gemäß Punkt 4.1 werden gemischt und mit 1500 Teilen deionisiertem Wasser sowie 25 Teilen einer 10 %igen wäßrigen Milchsäurelösung verdünnt. Zu der so entstandenen Mischung werden 646 Teile der Pigmentpaste gemäß Punkt 3. unter Rühren zugesetzt. Der so erhaltene Elektrotauchlack wird mit deionisiertem Wasser auf 5000 Teile aufgefüllt. Nach 5 Tagen Alterung bei Raumtemperatur wird auf einer kathodisch geschalteten Stahlprüftafel abgeschieden. Dabei beträgt die Abscheidespannung 300 V, die Abscheidezeit 2 min und die Badtemperatur wird auf 30°C eingestellt. Der abgeschiedene Lackfilm wird mit deionisiertem Wasser abgespült und 20 min lang bei 165°C eingebrannt. Die so erhaltenen eingebrannten Lackfilme wurden geprüft. Die Prüfergebnisse können der Tabelle 1 entnommen werden.

### 5.2 Elektrotauchlack (II)

2078 Teile der Dispersion gemäß Punkt 2. und 815 Teile der Dispersion gemäß Punkt 4.2 werden gemischt und mit 1300 Teilen deionisiertem Wasser sowie 25 Teilen einer 10 %igen wäßrigen Milchsäurelösung verdünnt. Zu der so entstandenen Mischung werden 646 Teile der Pigmentpaste gemäß Punkt 3. unter Rühren zugesetzt. Der so erhaltene Elektrotauchlack wird mit deionisiertem Wasser auf 5000 Teile aufgefüllt. Nach 5 Tagen Alterung bei Raumtemperatur wird auf einer kathodisch geschalteten Stahlprüftafel abgeschieden. Dabei beträgt die Abscheidespannung 300 V, die Abscheidezeit 2 min und die Badtemperatur wird auf 30°C eingestellt. Der abgeschiedene Lackfilm wird mit deionisiertem Wasser abgespült und 20 min lang bei 165°C eingebrannt. Die so erhaltenen eingebrannten Lackfilme wurden geprüft. Die Prüfergebnisse können der Tabelle 1 entnommen werden.

### 6. Herstellung und Abscheidung eines Elektrotauchlackes des Standes der Technik (Elektrotauchlack (III); Vergleichsbeispiel)

2598 Teile der Dispersion gemäß Punkt 2. werden mit 1500 Teilen deionisiertem Wasser sowie 25 Teilen einer 10 %igen wäßrigen Milchsäurelösung verdünnt. Zu der so entstandenen Mischung werden 646 Teile der Pigmentpaste gemäß Punkt 3. unter Rühren zugesetzt. Der so erhaltene Elektrotauchlack wird mit deionisiertem Wasser auf 5000 Teile aufgefüllt. Nach 5 Tagen Alterung bei Raumtemperatur wird auf einer kathodisch geschalteten Stahlprüftafel abgeschieden. Dabei beträgt die Abscheidespannung 300 V, die Abscheidezeit 2 min und die Badtemperatur wird auf 30°C eingestellt. Der abgeschiedene Lackfilm wird mit deionisiertem Wasser abgespült und 20 min lang bei 165°C eingebrannt. Die so erhaltenen eingebrannten Lackfilme wurden geprüft. Die Prüfergebnisse können der Tabelle 1 entnommen werden.

**Tabelle 1**

| Elektrotauchlack | (I) | (II) | (III) |
|---|---|---|---|
| 360 h Salzsprühnebelbelastung nach ASTM B 117 | | | |
| | | | |
| Unterwanderung in mm | 0,6 | 0,7 | 0,8 |
| | | | |
| Flächenrost¹⁾ | 1 | 1 | 1 |
| | | | |
| Kantenrost¹⁾ | 1 | 1 | 5 |
| | | | |
| Elektrische Gütezahl²⁾ in % | 95 | 100 | 4 |
| | | | |
| Sandabrieb³⁾ nach Spezifikation Nr. 4100 der Firma Adam Opel AG in µm⁻¹ | 1,2 | 1,6 | 1,0 |

| | | | |
|---|---|---|---|
| ¹⁾ 0 = bester Wert; 5 = schlechtester Wert | | | |
| ²⁾ Diese Zahl wird ermittelt, indem eine Spannung von 50 - 1000 V an die beschichtete Kante gelegt und die Isolierwirkung gegen elektrischen Strom bestimmt wird. Je höher die elektrische Gütezahl ist, desto höher ist die Isolierwirkung. Je höher die Isolier wirkung ist, desto besser ist die Kante mit einem Elektrotauchlackfilm beschichtet. | | | |
| ³⁾ Je höher der Wert, dest höher ist die Widerstandsfähigkeit des Lackfilms gegenüber Sandabrieb. | | | |

## Patentansprüche

1. Kathodisch abscheidbare Kunstharze enthaltende wäßrige Elektrotauchlacke, dadurch gekennzeichnet, daß sie 5 bis 45 Gew.%, bezogen auf den nichtflüchtigen Anteil der Elektrotauchlacke, Polymermikroteilchen mit einer Teilchengröße von 0,01 bis 10 µm enthalten, die herstellbar sind, indem
(a) ein Polyisocyanat oder eine Mischung aus Polyisocyanaten mit
(b) einer organischen Verbindung, die pro Molekül sowohl mindestens eine ethylenisch ungesättigte Doppelbindung als auch mindestens ein aktives Wasserstoffatom enthält oder einer Mischung aus solchen organischen Verbindungen und
(c) einer organischen Verbindung, die pro Molekül sowohl mindestens ein aktives Wasserstoffatom als auch mindestens eine tertiäre Aminogruppe und/oder mindestens eine Ketimin- und/oder mindestens eine Aldimingruppe enthält oder einer Mischung aus solchen organischen Verbindungen sowie gegebenenfalls
(d) einer von (b) und (c) verschiedenen organischen Verbindung, die pro Molekül mindestens ein aktives Wasserstoffatom enthält oder einer Mischung aus solchen organischen Verbindungen
in einem solchen Mengenverhältnis umgesetzt wird, daß 3 bis 80 Prozent der NCO- Gruppen der Komponente (a) mit der Komponente (b), 3 bis 80 Prozent der NCO- Gruppen der Komponente (a) mit der Komponente (c) und 0 bis 94 Prozent der NCO- Gruppen der Komponente (a) mit der Komponente (d) umgesetzt werden, das so erhaltene Umsetzungsprodukt in Wasser dispergiert und radikalisch polymerisiert wird, wobei vor, während oder nach der Dispergierung mindestens 5 Prozent der im Umsetzungsprodukt enthaltenen tertiären und/oder primären Aminogruppen mit einer Brönstedsäure neutralisiert werden.

2. Elektrotauchlacke nach Anspruch 1, dadurch gekennzeichnet, daß als Komponente (a) ein Polyisocyanat, das im statistischen Mittel 1,1 bis 3,0 NCO- Gruppen pro Molekül enthält oder eine Mischung aus solchen Polyisocyanaten eingesetzt wird.

3. Elektrotauchlacke nach Anspruch 1 oder 2, dadurch gekennzeichnet, daß als Komponente (b) ein Derivat der Acrylsäure oder Methacrylsäure, das eine Hydroxyl-, eine Amino- oder eine Mercaptogruppe enthält oder eine Mischung aus solchen Derivaten der Acrylsäure oder Methacrylsäure eingesetzt wird.

4. Elektrotauchlacke nach einem der Ansprüche 1 bis 3, dadurch gekennzeichnet, daß als Komponente (b) ein Hydroxyalkylester der Acrylsäure oder Methacrylsäure oder eine Mischung aus Hydroxylalkylestern der Acrylsäure oder Methacrylsäure eingesetzt wird.

5. Elektrotauchlacke nach einem der Ansprüche 1 bis 4, dadurch gekennzeichnet, daß als Komponente (c) eine Verbindung der allgemeinen Formel A-R³-X (I) oder eine Mischung aus solchen Verbindungen eingesetzt wird, wobei A für eine Gruppe der allgemeinen Formel R¹R²N- oder R¹R²C = N-steht, R³ für einen Alkylenrest mit 1 bis 20 C-Atomen oder für eine Gruppe der allgemeinen Formel -R⁴-O-R⁵- steht und X für eine Hydroxylgruppe, eine primäre Aminogruppe oder eine Gruppe der allgemeinen Formel -NH-R⁶ steht, wobei R¹ und R² gleich oder verschieden sein können und jeweils für einen Kohlenwasserstoffrest mit 1 bis 20 C-Atomen stehen, R⁴ und R⁵ gleich oder verschieden sein können und jeweils für einen Alkylenrest mit 1 bis 12 C-Atomen stehen und R⁶ für einen Kohlenwasserstoffrest mit 1 bis 20 C-Atomen oder für eine Gruppe der allgemeinen Formel -R³-A steht, wobei A und R³ die oben erläuterte Bedeutung haben.

6. Elektrotauchlacke nach einem der Ansprüche 1 bis 5, dadurch gekennzeichnet, daß die Komponenten (a), (b), (c) und (d) in einem solchen Mengenverhältnis miteinander umgesetzt werden, daß 5 bis 40 Prozent der NCO- Gruppen der Komponente (a) mit der Komponente (b), 3 bis 15 Prozent der NCO- Gruppen der Komponente (a) mit der Komponente (c) und 45 bis 92 Prozent der NCO- Gruppen der Komponente (a) mit der Komponente (d) umgesetzt werden.

7. Verfahren zum Lackieren elektrisch leitfähiger Substrate, bei dem
(1) das elektrisch leitfähige Substrat in einen wäßrigen Elektrotauchlack getaucht wird,
(2) das Substrat als Kathode geschaltet wird,
(3) durch Gleichstrom ein Film auf dem Substrat abgeschieden wird,
(4) das lackierte Substrat aus dem Elektrotauchlack entfernt wird und
(5) der abgeschiedene Lackfilm eingebrannt wird,
dadurch gekennzeichnet, daß in Stufe (1) des Verfahrens ein Elektrotauchlack gemäß eines der Ansprüche 1 bis 6 eingesetzt wird.

## Claims

1. Aqueous electrocoating compositions containing cathodically depositable synthetic resins, characterized in that they contain 5 to 45 % by weight, based on the nonvolatile content of the electrocoating composition, of polymer microparticles which have a particle size of 0.01 to 10 µm and are preparable by reacting
(a) a polyisocyanate or a mixture of polyisocyanates with
(b) an organic compound containing not only at least one ethylenically unsaturated double bond but also at least one active hydrogen atom per molecule or a mixture of such organic compounds and
(c) an organic compound containing not only at least one active hydrogen atom but also at least one tertiary amino group and/or at least one ketimine group and/or at least one aldimine group per molecule or a mixture of such organic compounds and, if desired,
(d) an organic compound other than (b) and (c) containing at least one active hydrogen atom per molecule or a mixture of such organic compounds
in such a mass ratio that 3 to 80 per cent of the NCO groups of component (a) are reacted with component (b), 3 to 80 per cent of the NCO groups of component (a) are reacted with component (c) and 0 to 94 per cent of the NCO groups of component (a) are reacted with component (d) and the reaction product thus obtained is dispersed in water and subjected to free radical polymerization, with at least 5 per cent of the tertiary and/or primary amino groups present in the reaction product being neutralized with a Brönsted acid before, during or after dispersion.

2. Electrocoating compositions according to Claim 1, characterized in that the component (a) used is a polyisocyanate which on statistical average contains 1.1 to 3.0 NCO groups per molecule or a mixture of such polyisocyanates.

3. Electrocoating compositions according to Claim 1 or 2, characterized in that the component (b) used is a derivative of acrylic acid or methacrylic acid containing a hydroxyl, an amino or a mercapto group or is a mixture of such derivatives of acrylic acid or methacrylic acid.

4. Electrocoating compositions according to one of Claims 1 to 3, characterized in that the component (b) used is a hydroxyalkyl ester of acrylic acid or methacrylic acid or a mixture of hydroxylalkyl [sic] esters of acrylic acid or methacrylic acid.

5. Electrocoating compositions according to one of Claims 1 to 4, characterized in that the component (c) used is a compound of the general formula A-R³-X (I) or a mixture of such compounds where A is a group of the general formula R¹R²N- or R¹R²C=N-, R³ is an alkylene radical having 1 to 20 carbon atoms or a group of the general formula -R⁴-O-R⁵- and X is a hydroxyl group, a primary amino group or a group of the general formula -NH-R⁶ where R¹ and R² can be identical or different and are each a hydrocarbon radical having 1 to 20 carbon atoms, R⁴ and R⁵ can be identical or different and are each an alkylene radical having 1 to 12 carbon atoms and R⁶ is a hydrocarbon radical having 1 to 20 carbon atoms or a group of the general formula -R³-A where A and R³ are as defined above.

6. Electrocoating composition according to one of Claims 1 to 5, characterized in that the components (a), (b), (c) and, if used, (d) are reacted with one another in such a mass ratio that 5 to 40 per cent of the NCO groups of component (a) are reacted with component (b), 3 to 15 per cent of the NCO groups of component (a) are reacted with component (c) and 45 to 92 per cent of the NCO groups of component (a) are reacted with component (d).

7. Process for coating electrically conductive substrates, in which
(1) the electrically conductive substrate is dipped into an aqueous electrocoating composition,
(2) the substrate is connected as the cathode,
(3) direct current is used to deposit a film on the substrate,
(4) the coated substrate is removed from the electrocoating composition and
(5) the deposited coating film is baked,
characterized in that in step (1) of the process an electrocoating composition according to one of Claims 1 to 6 is used.

## Revendications

1. Laques aqueuses pour trempage électrophorétique, contenant des résines synthétiques susceptibles d'être déposées à la cathode, caractérisée en ce qu'elles contiennent de 5 à 45 % en poids, par rapport à la portion non volatile des laques pour trempage électrophorétique, de microparticules polymères ayant une grandeur de particules de 0,01 à 10 microns, que l'on peut préparer en faisant réagir
(a) un polyisocyanate ou un mélange de polyisocyanates avec
(b) un composé organique, qui contient par molécule non seulement au moins une liaison double éthyléniquement insaturée, mais aussi au moins un atome d'hydrogène actif, ou un mélange de composés organiques de ce genre et
(c) un composé organique, qui contient par molécule non seulement au moins un atome d'hydrogène actif, mais aussi au moins un groupement amino tertiaire et/ou au moins un groupement cétimine et/ou au moins un groupement aldimine, ou un mélange de composés organiques de ce genre ainsi que, le cas échéant,
(d) un composé organique, différent de (b) et de (c), qui contient par molécule au moins un atome d'hydrogène actif, ou un mélange de composés organiques de ce genre,
dans un rapport quantitatif tel que de 3 à 80 pour cent des groupements NCO du composant (a) réagissent avec le composant (b), que de 3 à 80 pour cent des groupements NCO du composant (a) réagissent avec le composant (c) et que de 0 à 94 pour cent des groupements NCO du composant (a) réagissent avec le composant (d), et que le produit de réaction ainsi obtenu soit dispersé dans l'eau et soit polymérisé de manière radicalaire, au moins 5 pour cent des groupements amino tertiaires et/ou primaires contenus dans le produit de réaction étant neutralisés, avant, pendant ou après la dispersion, par un acide de Brönsted.

2. Laques pour trempage électrophorétique selon la revendication 1, caractérisées en ce que l'on utilise, en tant que composant (a), un polyisocyanate, qui contient en moyenne statistique de 1,1 à 3,0 groupements NCO par molécule ou un mélange de polyisocyanates de ce genre.

3. Laques pour trempage électrophorétique selon la revendication 1 ou 2, caractérisées en ce que l'on utilise, en tant que composant (b), un dérivé de l'acide acrylique ou de l'acide méthacrylique, qui contient un groupement hydroxyle, amino ou mercapto, ou un mélange de dérivés de ce genre de l'acide acrylique et ou de l'acide méthacrylique.

4. Laques pour trempage électrophorétique selon l'une quelconque des revendications 1 à 3, caractérisées en ce que l'on utilise, en tant que composant (b), un ester hydroxyalkyle de l'acide acrylique ou de l'acide méthacrylique, ou un mélange d'esters hydroxyalkyle de l'acide acrylique ou de l'acide méthacrylique.

5. Laques pour trempage électrophorétique selon l'une quelconque des revendications 1 à 4, caractérisées en ce que l'on utilise, en tant que composant (c), un composé de formule générale A-R³-X (I) ou un mélange de composés de ce genre, A désignant un groupement de formule générale R¹R²N- ou R¹R²C = N-, R³ désignant un résidu alkylène ayant de 1 à 20 atomes de C ou un groupement de formule générale -R⁴-O-R⁵ et X désignant un groupement hydroxyle, un groupement amino primaire ou un groupement de formule générale -NH-R⁶, R¹ et R² pouvant être identiques ou différents et représentant à chaque fois un résidu d'hydrocarbures ayant de 1 à 20 atomes de C, R⁴ et R⁵ pouvant être identiques ou différents et représentant à chaque fois un résidu alkylène ayant de 1 à 12 atomes de C, et R⁶ désignant un résidu d'hydrocarbures ayant de 1 à 20 atomes de C ou un groupement de formule générale -R³-A, A et R³ ayant la signification décrite ci-dessus.

6. Laques pour trempage électrophorétique selon l'une quelconque des revendications 1 à 5, caractérisées en ce que les composants (a), (b), (c) et (d) réagissent les uns avec les autres dans un rapport quantitatif tel que de 5 à 40 pour cent des groupements NCO du composant (a) réagissent avec le composant (b), que de 3 à 15 pour cent des groupements NCO du composant (a) réagissent avec le composant (c), et que de 45 à 92 pour cent des groupements NCO du composant (a) réagissent avec le composant (d).

7. Procédé de laquage de substrats électroconducteurs, lors duquel
(1) le substrat électroconducteur est immergé dans une laque aqueuse pour trempage électrophorétique,
(2) le substrat est branché en tant que cathode,
(3) un film est déposé sur le substrat par un courant continu,
(4) le substrat laqué est retiré du bain pour trempage électrophorétique et
(5) le film de laque déposé est soumis à cuisson,
caractérisé en ce que l'on utilise, dans l'étape (1) du procédé, une laque pour trempage électrophorétique conformément à l'une des revendications 1 à 6.
